(19) **Europäisches Patentamt**

**European Patent Office**

**Office européen des brevets**

(11) **EP 0 956 703 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(21) Anmeldenummer: **98904004.3**

(22) Anmeldetag: **07.01.1998**

(51) Int Cl.⁷: **H04N 7/30**

(86) Internationale Anmeldenummer:
**PCT/DE98/00026**

(87) Internationale Veröffentlichungsnummer:
**WO 98/34406 (06.08.1998 Gazette 1998/31)**

(54) **VERFAHREN UND ANORDNUNG ZUR CODIERUNG UND DECODIERUNG EINES DIGITALISIERTEN BILDES**

METHOD AND DEVICE FOR CODING AND DECODING A DIGITIZED IMAGE

PROCEDE ET DISPOSITIF DE CODAGE ET DE DECODAGE D'UNE IMAGE NUMERISEE

(84) Benannte Vertragsstaaten:
**DE ES FR GB IT NL SE**

(30) Priorität: **31.01.1997 DE 19703672**

(43) Veröffentlichungstag der Anmeldung:
**17.11.1999 Patentblatt 1999/46**

(73) Patentinhaber: **SIEMENS AKTIENGESELLSCHAFT**
**80333 München (DE)**

(72) Erfinder: **KAUP, Andre**
**D-85635 Höhenkirchen (DE)**

(56) Entgegenhaltungen:
- **KAUP A. , PANIS S.: "on the performance of the shape adaptive DCT in object-based coding of motion compensated difference images" ITG-FACHBERICHTE, Nr. 143, 1997, Seiten 653-657, XP002065355**
- **SIKORA T: "LOW COMPLEXITY SHAPE-ADAPTIVE DCT FOR CODING OF ARBITRARILY SHAPED IMAGE SEGMENTS" SIGNAL PROCESSING. IMAGE COMMUNICATION, Bd. 7, Nr. 4/06, 1.November 1995, Seiten 381-395, XP000538019**

## Beschreibung

Die Codierung von Videosignalen entsprechend der Bildcodierungsstandards H.261, H.263, MPEG1 und MPEG2 basiert auf einer blockorientierten diskreten Cosinustransformation (DCT). Diese Verfahren verwenden allgemein das Prinzip der blockbasierten Bildcodierung.

Ein weiterer Ansatz zur Bildcodierung ist das sogenannte Prinzip der objektbasierten Bildcodierung. Bei der objektbasierten Bildcodierung erfolgt eine Segmentierung der Bildvorlagen entsprechend der in der Szene vorkommenden Objekte und eine separate Codierung dieser Objekte.

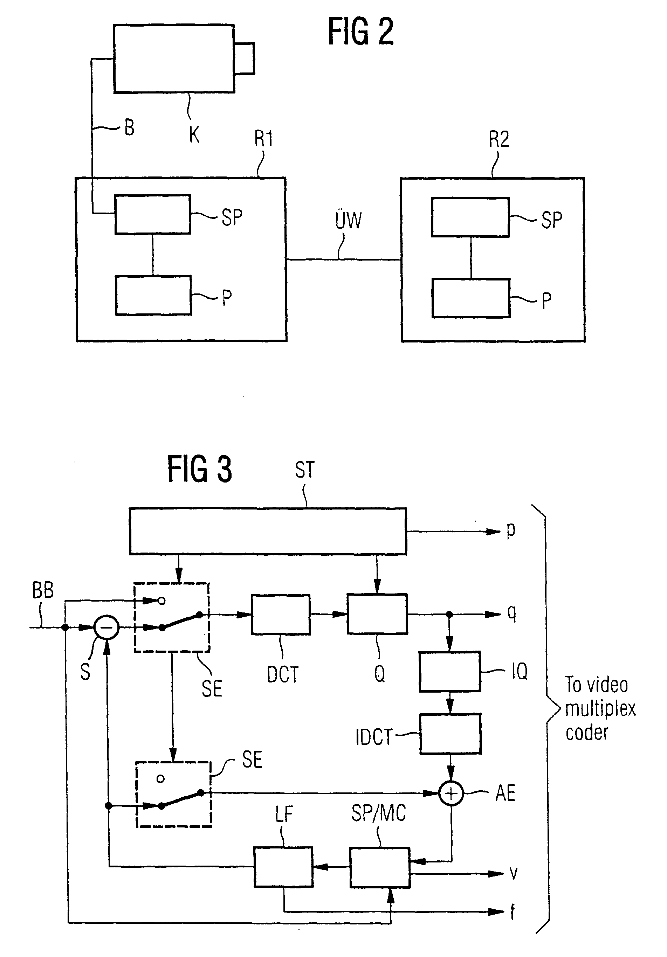

In Fig. 2 ist allgemein eine Anordnung zur Bildcodierung und Bilddecodierung dargestellt.

In Fig. 2 ist eine Kamera K dargestellt, mit der Bilder aufgenommen werden. Die Kamera K kann beispielsweise eine beliebige analoge Kamera K sein, die Bilder einer Szene aufnimmt und die Bilder entweder in der Kamera K digitalisiert oder auch analog zu einem ersten Rechner R1 überträgt, in dem dann entweder die digitalisierten Bilder B verarbeitet werden oder die analogen Bilder zu digitalisierten Bildern B umgewandelt werden und die digitalisierten Bilder B verarbeitet werden.

Die Kamera K kann auch eine digitale Kamera K sein, mit der direkt digitalisierte Bilder B aufgenommen und dem ersten Rechner R1 zur Weiterverarbeitung zugeführt werden.

Der erste Rechner R1 kann auch als eine eigenständige Anordnung ausgestaltet sein, mit der die im weiteren beschriebenen Verfahrensschritte durchgeführt werden, beispielsweise als eine eigenständige Computerkarte, die in einem Rechner installiert ist.

Der erste Rechner R1 weist eine Prozessoreinheit P auf, mit der die im weiteren beschriebenen Verfahrensschritte der Bildcodierung oder der Bilddecodierung durchgeführt werden. Die Prozessoreinheit P ist beispielsweise über einen Bus BU mit einem Speicher SP gekoppelt, in dem die Bilddaten gespeichert werden.

Allgemein können die im weiteren beschriebenen Verfahren sowohl in Software als auch in Hardware oder auch teilweise in Software und teilweise in Hardware realisiert werden.

Nach erfolgter Bildcodierung in dem ersten Rechner R1 und nach Übertragung der komprimierten Bilddaten über ein Übertragungsmedium ÜM zu einem zweiten Rechner R2 wird in dem zweiten Rechner R2 die Bilddecodierung durchgeführt.

Der zweite Rechner R2 kann den gleichen Aufbau haben wie der erste Rechner R1, also den Speicher SP, der über den Bus BU mit der Prozessoreinheit P gekoppelt ist.

In Fig. 3 ist in detaillierterer Form eine mögliche Anordnung in Form eines Prinzipschaltbilds zur Bildcodierung bzw. zur Bilddecodierung dargestellt, die im Rahmen der blockbasierten und zum Teil, wie im weiteren erläutert, im Rahmen der objektbasierten Bildcodierung verwendet werden kann.

Bei blockbasierten Bildcodierungsverfahren wird ein digitalisiertes Bild B in üblicherweise quadratische Blöcke der Größe 8x8 Bildpunkte BP oder 16x16 Bildpunkte BP aufgeteilt und der Anordnung zur Bildcodierung zugeführt.

Einem Bildpunkt ist üblicherweise Codierungsinformation eindeutig zugeordnet, beispielsweise Helligkeitsinformation (Luminanzwerte) oder Farbinformation (Chrominanzwerte).

Bei den blockbasierten Bildcodierungsverfahren wird zwischen verschiedenen Bildcodierungsmodi unterschieden.

Bei dem sog. Intra-Bildcodierungs-Modus wird jeweils das gesamte Bild mit der gesamten, den Bildpunkten des Bildes zugeordneten Codierungsinformation codiert und übertragen (I-Bild).

Bei dem sog. Inter-Bildcodierungs-Modus wird jeweils nur die Differenzbildinformation zweier zeitlich aufeinanderfolgender Bilder codiert und übertragen (P-Bild, B-Bild).

Zum Umschalten zwischen dem Intra-Bildcodierungs-Modus und dem Inter-Bildcodierungs-Modus sind zwei Schaltereinheiten SE vorgesehen. Zur Durchführung des Inter-Bildcodierungs-Modus ist eine Subtraktionseinheit S vorgesehen, in der die Differenz der Bildinformation zweier aufeinanderfolgender Bilder B gebildet wird. Die gesamte Bildcodierung wird über eine Bildcodierungs-Steuereinheit ST gesteuert. Die zu codierenden Bildblöcke BB bzw. Differenzbildblöcke BB werden jeweils einer Transformationscodierungseinheit DCT zugeführt, in der auf die den Bildpunkten zugeordnete Codierungsinformation eine Transformationscodierung, beispielsweise die diskrete Cosinustransformation (DCT) angewendet wird.

Allgemein kann jedoch jede beliebige Transformationscodierung, beispielsweise eine diskrete Sinustransformation oder auch eine diskrete Fouriertransformation durchgeführt werden.

Die durch die Transformationscodierung gebildeten Spektral-koeffizienten werden in einer Quantisierungseinheit Q quantisiert und einen Bildcodierungsmultiplexer (nicht dargestellt) beispielsweise zur Kanalcodierung und/oder zur Entropiecodierung zugeführt. In einer internen Rekonstruktionsschleife werden die quantisierten Spektralkoeffizienten invers quantisiert in einer inversen Quantisierungseinheit IQ und einer inversen Transformationscodierung in einer inversen Transformationscodierungseinheit IDCT unterzogen.

Ferner wird im Fall der Inter-Bildcodierung in einer Addiereinheit AE Bildinformation des jeweiligen zeitlich vorangegangenen Bildes hinzuaddiert. Die auf diese Weise rekonstruierten Bilder werden in einem Bildspeicher SP gespeichert. In dem Bildspeicher SP ist zur einfacheren Darstellung eine Einheit zur Bewegungskompensation MC symbolisch dargestellt.

Ferner ist ein Schleifenfilter (Loopfilter LF) vorgesehen, das mit dem Speicher SP sowie der Subtraktionseinheit S verbunden ist.

Dem Bildcodierungsmultiplexer werden zusätzlich zu den zu übertragenen Bilddaten ein Modusflag p zugeführt, mit dem jeweils angegeben wird, ob eine Intra-/ oder Inter-Bildcodierung vorgenommen wurde.

Ferner werden Quantisierungsindizes q für die Spektralkoeffizienten dem Bildcodierungsmultiplexer zugeführt.

Auch ein Bewegungsvektor v wird jeweils einem Bildblock und/oder einen Makroblock, der beispielsweise 4 Bildblöcke aufweist zugeordnet und dem Bildcodierungsmultiplexer zugeführt.

Ferner ist eine Informationsangabe f zum Aktivieren bzw. Deaktivieren des Schleifenfilters LF vorgesehen.

Nach Übertragung der Bildinformation über das Übertragungsmedium ÜM kann in dem zweiten Rechner R2 die Decodierung der übertagenen Daten erfolgen. Hierzu ist in dem zweiten Rechner R2 eine Bilddecodiereinheit vorgesehen, die beispielsweise den Aufbau der Rekonstruktionsschleife der in Fig. 2 dargestellten Anordnung aufweist.

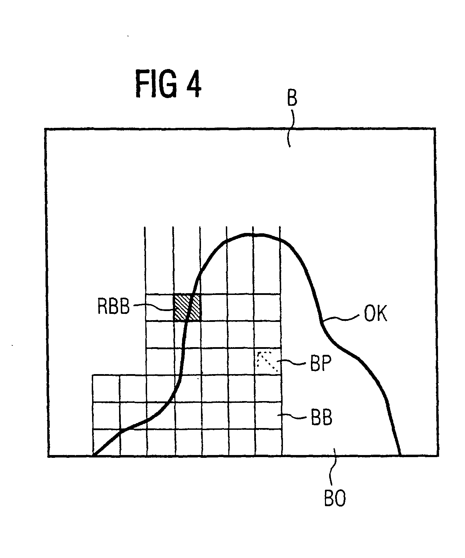

Bei objektbasierten Bildcodierungsverfahren wird jedes Bildobjekt zunächst in Blöcke einer festen Größe, beispielsweise ebenfalls 8x8 Bildpunkte zerlegt. Nach dieser Zerlegung befindet sich ein Teil der resultierenden Bildblöcke vollständig innerhalb eines Bildobjekts BO. Diese Situation ist in Fig. 4 dargestellt. Das Bild B enthält mindestens ein Bildobjekt BO, welches berandet wird mit einer Objektkante OK des Bildobjekts BO. Ferner sind Bildblöcke BB mit 8x8 Bildpunkten BP dargestellt. Bildblöcke BB, die zumindest einen Teil der Objektkante OK enthalten, werden im weiteren als Randbildblöcke RBB bezeichnet.

Bildblöcke BB, die sich nach der Zerlegung vollständig innerhalb des Bildobjekts BO befinden, können in Anlehnung an die oben genannten blockbasierten Bildcodierungsverfahren mit einer gewöhnlichen blockbasierten diskreten Cosinustransformation codiert werden. Die Randbildblöcke RBB sind jedoch teilweise mit Bildinformation gefüllt und müssen mit einem besonderen Verfahren codiert werden.

Für die Codierung der Randbildblöcke RBB existieren bisher zwei grundsätzliche Ansätze.

Aus dem Dokument [1] ist es bekannt, die Bildinformation des Bildobjekts BO innerhalb des Randbildblocks RBB durch ein geeignetes Extrapolationsverfahren der Codierungsinformation auf die Fläche des vollständigen Randbildblocks RBB zu ergänzen. Diese Vorgehensweise wird als Padding bezeichnet. Die ergänzte Fläche wird anschließend mit einer gewöhnlichen 2-dimensionalen Diskreten Cosinus Transformation codiert.

Alternativ dazu ist es aus den Dokumenten [1] und [2] bekannt, daß das gegebene Bildobjekt BO getrennt nach Zeilen und Spalten transformiert wird. Diese Vorgehensweise wird als formangepaßte Transformationscodierung, in dem konkreten Fall der Verwendung einer DCT als formangepaßte DCT bezeichnet. Die zu dem Bildobjekt BO zugeordneten DCT-Koeffizienten werden derart bestimmt, daß diejenigen Bildpunkte BP eines Randbildblocks RBB, die nicht zu dem Bildobjekt BO gehören, ausgeblendet werden. Auf die verbleibenden Bildpunkte BP wird dann zunächst zeilenweise eine Transformation angewendet, deren Länge der Zahl der verbleibenden Bildpunkte in dieser Zeile entspricht. Die resultierenden Koeffizienten werden horizontal ausgerichtet und anschließend einer weiteren eindimensionalen DCT in vertikaler Richtung mit entsprechender Länge unterworfen. Hierbei wird sowohl für die Intra-Bildcodierung als auch für die Inter-Bildcodierung das gleiche Verfahren angewendet.

Das bekannte Verfahren der formadaptiven Transformationscodierung, welches oben beschrieben wurde, weist v. a. den Nachteil auf, daß nur ein relativ schlechter Kompressionsfaktor der zu komprimierenden Bilddaten erreicht wird.

Die bekannte Vorschrift zur Codierung von Prädiktionsfehlerbildern bei der formangepaßten Transformationscodierung geht von einer Transformationsmatrix $\underline{DCT - N}$ mit folgendem Aufbau aus:

$$\underline{DCT - N}(p,k) = \gamma \cdot \cos\left[p \cdot \left(k + \frac{1}{2}\right) \cdot \frac{\pi}{N}\right] \quad k, p = 0 \longrightarrow N - \qquad (1).$$

Hierbei ist der Wert

$$\gamma = \frac{1}{\sqrt{2}}$$

für den Fall p=0 und $\gamma = 1$ für alle anderen Fälle.

Mit N wird eine Größe des zu transformierenden Bildvektors bezeichnet, in dem die transformierten Bildpunkte enthalten sind.

Mit DCT - N wird eine Transformationsmatrix der Größe N x N bezeichnet.

Mit p, k werden Indizes bezeichnet mit p, k $\in$ [0, N-1].

Nach der bekannten Vorgehensweise wird die formangepaßte PCT eines Bildsegments dadurch bestimmt, daß zunächst jede Spalte des Segments gemäß der Vorschrift

$$\underline{c}_j = 2 \cdot \frac{2}{N} \cdot \underline{DCT - N} \cdot \underline{x}_j \qquad (2)$$

vertikal transformiert wird und danach die gleiche Vorschrift (2) auf die resultierenden Daten in horizontaler Richtung angewendet wird. Die Vorschrift gemäß Formel (2) ist jedoch für die Codierung von Prädiktionsfehlerbildern nicht optimal.

Aus [3] sind Grundlagen über blockbasierte Bildcodierung bekannt.

Aus Sikora T.: "Low Complexity Shape-Adapative DCT for Coding of Arbitrarily Shaped Image Segments", Signal Processing, Image Communication, Bd. 7, Nr. 4/06, 1. November 1995, Seiten 381-395, ist ein bildobjektorientiertes Bildcodierungssystem bekannt, bei dem das gegebene Bildobjekt nach Zeilen und Spalten getrennt transformiert wird. Hierbei wird jedoch nicht die Bildcodierung im Intra-Bildcodierungsmodus, bei dem Bildpixeldaten transformiert werden, und im Inter-Bildcodierungsmodus, bei dem Differenzdaten von zwei aufeinanderfolgenden Bildern transformiert werden, unterschiedlich ausgeführt.

Somit liegt der Erfindung das Problem zugrunde, Verfahren zur Bildcodierung und zur Bilddecodierung und Anordnungen zur Bildcodierung und zur Bilddecodierung anzugeben, mit denen eine formangepaßte Transformationscodierung erreicht wird mit verbessertem Kompressionsfaktor für die Bilddaten.

Das Problem wird durch das Verfahren gemäß Patentanspruch 1, durch das Verfahren gemäß Patentanspruch 6, durch die Anordnung gemäß Patentanspruch 11 und durch die Anordnung gemäß Patentanspruch 16 gelöst.

Bei dem Verfahren gemäß Patentanspruch 1 zur Ccodierung eines digitalisierten Bildes erfolgt die Bildcodierung in einem Intra-Bildcodierungsmodus oder in einem Inter-Bildcodierungsmodus. In dem Intra-Bildcodierungsmodus wird die Bildinformation der Bildpunkte transformiert und in dem Inter-Bildcodierungsmodus wird Differenzbildinformation von Bildinformation zweier aufeinanderfolgender Bilder transformiert. In dem Inter-Bildcodierungsmodus wird eine erste formangepaßte Transformationscodierung durchgeführt und in dem Intra-Bildcodierungsmodus wird eine zu der ersten formangepaßten Transformationscodierung unterschiedliche, zweite formangepaßte Transformationscodierung durchgeführt.

Vorteilhaft an dieser Vorgehensweise ist insbesondere, daß es ermöglicht wird durch Verwendung zweier unterschiedlicher Transformationscodierungen, daß der Quantisierungsfehler bei der anschließenden Quantisierung der durch die Transformation resultierenden Spektral-Koeffizienten gleichmäßig über alle Bildpunkte BP verteilt wird und der Quantisierungsfehler den gleichen mittleren Wert wie im Fall eines normalen 8x8-Bildblocks hat.

Dieses Verfahren eignet sich v.a. für die Codierung von Randbildblöcken eines Bildsegments.

Insgesamt wird durch das Verfahren eine deutlich verbesserte Codiereffizienz ermöglicht, d.h. bei gleicher Datenrate steigt die erzielbare Bildqualität. Wie im weiteren beschrieben wird, ist gegenüber der bekannten Vorgehensweise, bei der Intra-Bildcodierung und bei der Inter-Bildcodierung bei einer formangepaßten Bildcodierung dieselbe Transformation zu verwenden, ohne zusätzlichen Rechenaufwand ein erheblich verbessertes Signal-/Rauschleistungsverhältnis von in etwa einem dB erreichbar.

Bei dem Verfahren gemäß Patentanspruch 6 wird bei der Decodierung in dem Intra-Bildcodierungsmodus eine erste inverse formangepaßte Transformationscodierung durchgeführt. In dem Intra-Bildcodierungsmodus wird eine zweite inverse formangepaßte Transformationscodierung durchgeführt. Die erste inverse formangepaßte Transformationscodierung und die zweite inverse formangepaßte Transformationscodierung sind unterschiedlich.

Dieses Verfahren weist die entsprechend oben dargestellten Vorteile für die Bildcodierung ebenfalls auf.

Bei der Anordnung gemäß Patentanspruch 11 zur Durchführung der Verfahren ist eine Transformationscodierungseinheit vorgesehen zur formangepaßten Transformationscodierung der Bildpunkte und/oder eine Transformationsdecodierungseinheit zur inversen formangepaßten Transformationscodierung. Die Transformationscodierungseinheit bzw. die Transformationsdecodierungseinheit ist derart ausgestaltet, daß in dem Intra-Bildcodierungsmodus eine erste formangepaßte Transformationscodierung bzw. eine erste inverse formangepaßte Transformationscodierung durchgeführt wird. In dem Inter-Bildcodierungsmodus wird eine zweite formangepaßte Transformationscodierung bzw. eine zweite inverse formangepaßte Transformationscodierung durchgeführt. Die erste formangepaßte Transformationscodierung bzw. die erste inverse formangepaßte Transformationscodierung und die zweite formangepaßte Transformationscodierung bzw. die zweite inverse formangepaßte Transformationscodierung sind unterschiedlich.

Auch für die Anordnung gelten die oben beschriebenen Vorteile.

Vorteilhafte Weiterbildungen der Erfindung ergeben sich aus den abhängigen Ansprüchen.

In einer Weiterbildung der Verfahren ist es vorteilhaft, daß zumindeste eine der formangepaßten Transformationscodierungen bzw. zumindest eine der inversen formangepaßten Transformationscodierungen derart erfolgen, daß die Signalenergie der zu transformierenden Bildpunkte im Ortsbereich in etwa gleich ist mit der Signalenergie der transformierten Bildpunkte im Frequenzbereich.

Mit anderen Worten bedeutet dies, daß die entsprechende formangepaßte Transformationscodierung bzw. inverse formangepaßte Transformationscodierung ortonormalisiert wird. Vorteilhaft an dieser Vorgehensweise ist insbesondere, daß der Quantisierungsfehler bei der anschließenden Quantisierung der durch die Transformation resultierenden Spektralkoeffizienten gleichmäßig über alle Bildpunkte verteilt wird und der Quantisierungsfehler den gleichen mittleren Wert wie im Fall eines normalen 8x8-Bildblocks hat.

In einer Weiterbildung des Verfahrens zur Bildcodierung ist es ferner vorteilhaft, die Transformationskoeffizienten $\underline{c}_j$ der zu transformierenden Bildpunkte $\underline{x}_j$ nach folgender Vorschrift zu bilden:

$$\underline{c}_j = \sqrt{\frac{2}{N}} \cdot \underline{DCT - N}(p,k) \cdot \underline{x}_j \qquad (3),$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit p, k $\in$ [0, N-1].

Wie in der Vorschrift (3) erkennbar ist, wird die erhebliche Verbesserung lediglich durch eine unterschiedliche Skalierung der Transformationsvorschrift gegenüber der bekannten Vorgehensweise erreicht.

Die oben beschriebenen Weiterbildungen für das Verfahren zur Bildcodierung sind ebenso vorgesehen als Weiterbildungen für die Bilddecodierung, bei der Vorschrift zur inversen Transformationscodierung mit der entsprechend inversen Vorschrift.

Die Weiterbildungen der Verfahren sind ebenso vorteilhaft für Ausgestaltungen der Transformationscodierungseinheit der Anordnung zur Bildcodierung.

Diese Verfahren eignen sich v.a. für die Codierung bzw. Decodierung von Randbildblöcken eines Bildsegments.

In den Figuren ist ein Ausführungsbeispiel der Erfindung dargestellt, welches im weiteren näher erläutert wird.

Es zeigen

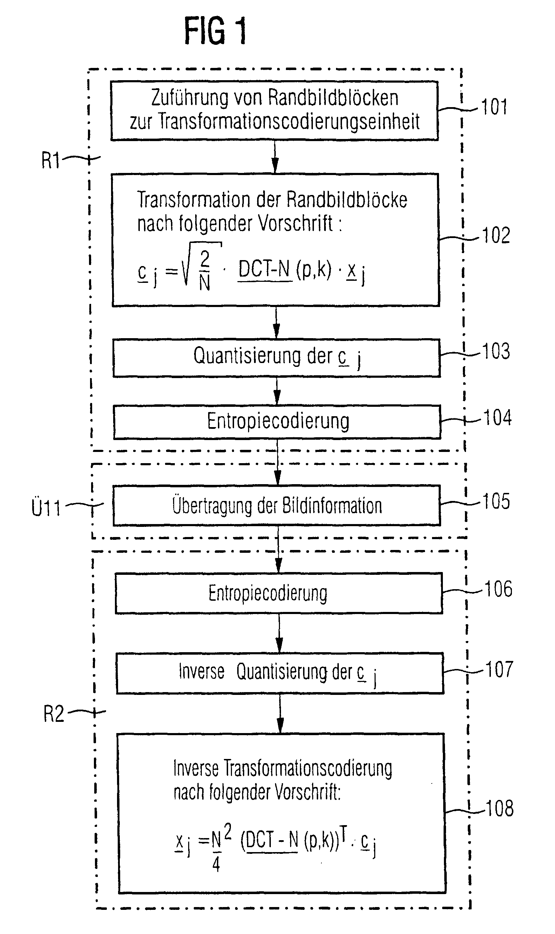

Fig. 1  ein Ablaufdiagramm, in dem die einzelnen Verfahrensschritte symbolhaft dargestellt sind;

Fig. 2  eine übliche Anordnung zur Bildcodierung mit einer Kamera, zwei Rechnern und einem Übertragungsmedium;

Fig. 3  eine Skizze einer üblichen Anordnung zur blockbasierten Bildcodierung;

Fig. 4  symbolhaft eine Darstellung eines Bildes mit einem Bildobjekt und Bildblöcken und Randbildblöcken.

Im Rahmen der objektbasierten Bildcodierung erfolgt eine Segmentierung des digitalisierten Bildes B entsprechend der in der Szene vorkommenden Bildobjekte BO und eine separate Codierung der Bildobjekte BO.

Dazu wird jedes Bildobjekt BO üblicherweise zunächst in Bildblöcke BB einer festen Größe, beispielsweise 8x8 Bildpunkte BP, zerlegt. Nach der Zerlegung befinden sich ein Teil der resultierenden Bildblöcke BB vollständig innerhalb des Bildobjekts BO. Diese Blöcke BB können in Anlehnung an die zitierten,oben erläterten Verfahren mit einer gewöhnlichen blockbasierten Transformationscodierung codiert werden.

Wie oben beschrieben, sind die Randbildblöcke RBB jedoch nur teilweise mit Bildinformationen gefüllt und müssen mit einem besonderen Verfahren codiert werden.

Bei dem Verfahren werden in dem ersten Rechner R1 vorzugsweise Randbildblöcke RBB in einem ersten Schritt 101 der Transformationscodierungseinheit DCT zugeführt. Der erste Rechner R1 ist derart ausgestaltet, daß die in Figur 3 symbolisch dargestellten Module durchgeführt werden können.

In einem zweiten Schritt 102 werden für jeden Randbildblock RBB für die Codierungsinformation der Bildpunkte BP des jeweiligen Randbildblocks RBB Transformationskoeffizienten $\underline{c}_j$ der zu transformierenden Bildpunkte $\underline{x}_j$ nach folgender Vorschrift gebildet:

$$\underline{c}_j = \sqrt{\frac{2}{N}} \cdot \underline{DCT - N}(p, k) \cdot \underline{x}_j \qquad (3),$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit $p, k \in [0, N\text{-}1]$.

Anschaulich bedeutet die Vorschrift zur Transformationscodierung (3), daß die Signalenergie der Codierungsinformation der zu transformierenden Bildpunkte im Ortsbereich gleich ist mit der Signalenergie der Codierungsinformation der transformierten Bildpunkte im Frequenzbereich.

Als formangepaßte Transformationscodierung wird vorzugsweise die formangepaßte diskrete Cosinustransformation verwendet.

Die Vorschrift (3) wird zur Transformationscodierung vorzugsweise angewendet, wenn die Bildcodierung in dem Inter-Bildcodierungs-Modus erfolgt.

Wenn die Bildcodierung in dem Intra-Bildcodierungs-Modus erfolgt, werden vorzugsweise die Transformationskoeffizienten $\underline{c}_j$ der transformierten Bildpunkte $\underline{x}_j$ nach folgender Vorschrift gebildet:

$$\underline{c}_j = 2 \cdot \frac{2}{N} \cdot \underline{DCT - N} \cdot \underline{x}_j \qquad (2).$$

Nach Übertragung der codierten Bildinformation (Schritt 105), d.h. nach Quantisierung (Schritt 103), eventuell Entropiecodierung (Schritt 104) der übertragenen Bilddaten beispielsweise nach dem in [1] beschriebenen Verfahren, über das Übertragungsmedium ÜM wird in dem zweiten Rechner R2 eine Bilddecodierung durchgeführt.

Bei der Bilddecodierung wird in einem ersten Schritt 106 eine Entropiedecodierung und in einem zweiten Schritt 107 eine inverse Quantisierung der quantisierten Spektralkoeffizienten durchgeführt. Die Spektralkoeffizienten $\underline{c}_j$ werden ferner der inversen formangepaßten Transformationscodierung (IDCT) zugeführt. Entsprechend zum Verfahren zur Bildcodierung wird wiederum zur Bilddecodierung eine formangepaßte Transformationscodierung derart durchgeführt, daß die Signalenergie der Codierungsinformation der transformierten Bildpunkte im Frequenzbereich in etwa gleich ist mit der Signalenergie der Codierungsinformation der Bildpunkte im Ortsbereich.

Zur inversen formangepaßten Transformationscodierung werden die Bildpunkte $\underline{x}_j$ aus den Spektraltransformationskoeffizienten $\underline{c}_j$ nach folgender Vorschrift gebildet (Schritt 108) :

$$\underline{x}_j = \sqrt{\frac{2}{N}} \cdot \left(\underline{DCT - N}(p, k)\right)^{-1} \cdot \underline{c}_j \qquad (4),$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit $p, k \in [0, N\text{-}1]$
- mit ( )⁻ eine Inversion einer Matrix bezeichnet wird.

Die inverse formangepaßte Transformationscodierung gemäß Vorschrift (4) wird vorzugsweise im Rahmen der Bilddecodierung im Inter-Bilddecodierungs-Modus durchgeführt.

Im Intra-Bilddecodierungs-Modus wird vorzugsweise die formangepaßte inverse Transformationscodierung nach folgender Vorschrift durchgeführt:

$$\underline{x}_j = \frac{1}{2} \cdot \left(\underline{DCT - N}(p, k)\right)^{-1} \cdot \underline{c}_j \qquad (5).$$

Bei der Anordnung zur Bildcodierung ist eine Transformationscodierungseinheit DCT vorgesehen zur formangepaßten Transformationscodierung der Bildpunkte BP. Die Transformationscodierungeinheit DCT ist derart ausgestaltet, daß eine Signalenergie der Codierungsinformation der zu transformierenden Bildpunkte im Ortsbereich in etwa gleich sind mit der Signalenergie der Codierungsinformation der transformierten Bildpunkte im Frequenzbereich.

Die Transformationscodierungseinheit ist vorzugsweise derart ausgestaltet, daß die im Rahmen des Verfahren zur Bildcodierung dargestellten Verfahrensschritte in der Transformationscodierungseinheit DCT realisiert sind. Das Verfahren kann selbstverständlich in der Anordnung auch in Software realisiert sein, die von dem Prozessor P verarbeitet wird.

Das gleiche gilt für die Anordnung zur Bilddecodierung, die eine inverse Transformationscodierungseinheit IDCT aufweist. Entsprechend ist die inverse Transformationscodierungseinheit IDCT derart ausgestaltet, daß die Verfahrensschritte zur Bilddecodierung, insbesondere zur inversen formangepaßten Transformationscodierung realisiert ist.

Sowohl das Verfahren als auch die Anordnungen sind vorzugsweise auf Randbildblöcke RBB von Bildobjekten BO eines digitalisierten Bildes B anwendbar.

Anschaulich bedeutet das Verfahren, daß bei der Intra-Bildcodierung und der Inter-Bildcodierung unterschiedliche formangepaßte Transformationscodierungen durchgeführt werden. Eine erste formangepaßte Transformationscodierung erfolgt bei der Intra-Bildcodierung und eine zu der ersten formangepaßten Transformationscodierung unterschiedliche zweite formangepaßte Transformationscodierung erfolgt bei der Inter-Bildcodierung.

Es ist für die Erfindung nicht wesentlich, in welcher Weise die transformierten Bildpunkte, d.h. die Spektralkoeffizienten im Rahmen der Bildcodierung weiter verwendet werden, d.h. die Art der Quantisierung, der Entropiecodierung bzw. der Kanalcodierung.

Im Rahmen dieses Dokuments wurden folgende Veröffentlichungen zitiert:

[1] ISO/IEC JTC1/SC29/WG11, MPEG-4 Video Verification Model Version 5.0 Doc.N1469, Nov. 1996, S. 55 - 59.

[2] T. Sikora und B. Makai, Shape Adaptive DCT for Generic Coding of Video, IEEE Transactions on Circuits and Systems for Video Technology, Vol. 5, S. 59 - 62, Feb. 1995

[3] A. K. Jain, Image Data Compression: A Review, Proceedings of the IEEE, Vol. 69, No. 3, S. 349 - 389, März 1981

**Patentansprüche**

1. Verfahren zur Codierung eines digitalisierten Bildes (B), das Bildobjekte (BO) mit einer beliebigen Anzahl Bildpunkte (BP) aufweist,
   **dadurch gekennzeichnet**,

   - dass die Bildcodierung in einem Intra-Bildcodierungsmodus oder in einem Inter-Bildcodierungsmodus erfolgt,
   - dass in dem Intra-Bildcodierungsmodus die Bildinformation der Bildpunkte transformiert wird,
   - dass in dem Inter-Bildcodierungsmodus Differenzbildinformation von Bildinformationen zweier aufeinanderfolgender Bilder transformiert wird,
   - dass in dem Inter-Bildcodierungsmodus eine erste formangepasste Transformationscodierung durchgeführt wird, und
   - dass in dem Intra-Bildcodierungsmodus eine zu der ersten formangepassten Transformationscodierung unterschiedliche, zweite formangepasste Transformationscodierung (IDCT) durchgeführt wird.

2. Verfahren nach Anspruch 1,

   - bei dem als erste formangepasste Transformationscodierung eine Variante einer formangepassten Diskreten Cosinus Transformation verwendet wird,
   - bei dem als zweite formangepasste Transformationscodierung eine formangepasste Diskrete Cosinus Transformation verwendet wird.

3. Verfahren nach Anspruch 1 oder 2,
   bei dem die erste formangepasste Transformationscodierung und/oder die zweite formangepasste Transformationscodierung derart erfolgt, dass eine Signalenergie der zu transformierenden Bildpunkte (BP) im Ortsbereich in etwa gleich ist mit einer Signalenergie der transformierten Bildpunkte im Frequenzbereich.

4. Verfahren nach einem der vorangegangenen Ansprüche,
   bei dem Transformationskoeffizienten $c_j$ der nach der ersten formangepaßten Transformationscodierung transfor-

mierten Bildpunkte $\underline{x}_j$ nach folgender Vorschrift gebildet werden:

$$\underline{c}_j = \sqrt{\frac{2}{N}} \cdot \underline{DCT - N}(p, k) \cdot \underline{x}_j$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit p, k $\in$ [0, N-1].

**5.** Verfahren nach einem der vorangegangenen Ansprüche,
bei dem die erste formangepaßte Transformationscodierung nur auf Randbildblöcke (RBB) angewendet wird.

**6.** Verfahren zur Decodierung eines digitalisierten Bildes (B), das Bildobjekte (BO) mit einer beliebigen Anzahl Bildpunkte (BP) aufweist,
**dadurch gekennzeichnet**,

- dass die Bilddecodierung in einem Intra-Bilddecodierungsmodus oder in einem Inter-Bilddecodierungsmodus erfolgt,
- dass in dem Intra-Bilddecodierungsmodus die Bildinformation (I-Bild) der Bildpunkte transformiert wird,
- dass in dem Inter-Bilddecodierungsmodus Differenzbildinformation von Bildinformation zweier aufeinanderfolgender Bilder (P-Bild, B-Bild) transformiert wird,
- dass in dem Inter-Bilddecodierungsmodus eine erste inverse formangepasste Transformationscodierung durchgeführt wird, und
- dass in dem Intra-Bilddecodierungsmodus eine zu der ersten inversen formangepassten Transformationscodierung unterschiedliche, zweite inverse formangepasste Transformationscodierung durchgeführt wird.

**7.** Verfahren nach Anspruch 6,

- bei dem als erste inverse formangepasste Transformationscodierung eine Variante einer formangepassten inversen Diskreten Cosinus Transformation verwendet wird,
- bei dem als zweite inverse formangepasste Transformationscodierung eine inverse formangepasste Diskrete Cosinus Transformation verwendet wird.

**8.** Verfahren nach Anspruch 6 oder 7,
bei dem die erste inverse formangepasste Transformationscodierung und/oder die zweite inverse formangepasste Transformationscodierung derart erfolgt, dass eine Signalenergie der zu transformierenden Bildpunkte im Ortsbereich in etwa gleich ist mit einer Signalenergie der transformierten Bildpunkte im Frequenzbereich.

**9.** Verfahren nach einem der Ansprüche 6 bis 8,
bei dem bei der ersten inversen formangepassten Transformationscodierung transformierte Bildpunkte $\underline{x}_j$ nach folgender Vorschrift aus Transformationskoeffizienten gebildet werden:

$$\underline{x}_j = \sqrt{\frac{2}{N}} \cdot (\underline{DCT - N}(p, k))^{-1} \cdot \underline{c}_j$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit p, k $\in$ [0, N-1]
- mit $()^{-1}$ eine Inversion einer Matrix bezeichnet wird.

**10.** Verfahren nach einem der Ansprüche 6 bis 9, bei dem die erste inverse formangepasste Transformationscodierung nur auf Randbildblöcke angewendet wird.

**11.** Anordnung zur Codierung eines digitalisierten Bildes (B), das Bildobjekte (BO) mit einer beliebigen Anzahl Bildpunkte (BP) aufweist, mit einer Prozessoreinheit (P),
**dadurch gekennzeichnet, dass** die Prozessoreinheit derart eingerichtet ist, dass

- die Bildcodierung in einem Intra-Bildcodierungsmodus oder in einem Inter-Bildcodierungsmodus erfolgt,
- in dem Intra-Bildcodierungsmodus die Bildinformation der Bildpunkte transformiert wird,
- in dem Inter-Bildcodierungsmodus Differenzbildinformation von Bildinformation zweier aufeinanderfolgender Bilder transformiert wird,
- in dem Inter-Bildcodierungsmodus eine erste formangepasste Transformationscodierung (IDCT) durchgeführt wird, und
- in dem Intra-Bildcodierungsmodus eine zu der ersten formangepassten Transformationscodierung unterschiedliche, zweite formangepasste Transformationscodierung durchgeführt wird.

**12.** Anordnung nach Anspruch 11,
bei der die Prozessoreinheit derart eingereichtet ist, dass

- als erste formangepasste Transformationscodierung eine Variante einer formangepassten Diskreten Cosinus Transformation verwendet wird,
- als zweite formangepasste Transformationscodierung eine formangepasste Diskrete Cosinus Transformation verwendet wird.

**13.** Anordnung nach Anspruch 11 oder 12,
bei der die Prozessoreinheit derart eingerichtet ist, dass die erste formangepasste Transformationscodierung und/ oder die zweite formangepasste Transformationscodierung derart erfolgt, dass eine Signalenergie der zu transformierenden Bildpunkte im Ortsbereich in etwa gleich ist mit einer Signalenergie der transformierten Bildpunkte im Frequenzbereich.

**14.** Anordnung nach einem der Ansprüche 11 bis 13,
bei der die Prozessoreinheit derart eingerichtet ist, dass Transformationskoeffizienten $\underline{c}_j$ der nach der ersten formangepassten Transformationscodierung transformierten Bildpunkte $\underline{x}_j$ nach folgender Vorschrift gebildet werden:

$$\underline{c}_j = \sqrt{\frac{2}{N}} \cdot \underline{DCT\text{-}N}(p, k) \cdot \underline{x}_j$$

wobei mit

- N eine Größe des zu transformierenden Bildvektors bezeichnet wird, in dem die transformierten Bildpunkte enthalten sind,
- $\underline{DCT\text{-}N}$ eine Transformationsmatrix der Größe N x N bezeichnet wird,
- p, k Indizes bezeichnet werden mit p, k $\in$ [0, N-1].

**15.** Anordnung nach einem der Ansprüche 11 bis 14,
bei der die Prozessoreinheit derart eingerichtet ist, dass die erste formangepasste Transformationscodierung nur auf Randbildblöcke (RBB) angewendet wird.

**16.** Anordnung zur Decodierung eines digitalisierten Bildes (B), das Bildobjekte (BO) mit einer beliebigen Anzahl Bildpunkte (BP) aufweist,
mit einer Prozessoreinheit (P), die derart eingerichtet ist, dass

- die Bilddecodierung in einem Intra-Bilddecodierungsmodus oder in einem Inter-Bilddecodierungsmodus erfolgt,
- in dem Intra-Bilddecodierungsmodus die Bildinformation der Bildpunkte transformiert wird,
- in dem Inter-Bilddecodierungsmodus Differenzbildinformation von Bildinformation zweier aufeinanderfolgender Bilder transformiert wird,

- in dem Inter-Bilddecodierungsmodus eine erste inverse formangepasste Transformationscodierung durchgeführt wird, und
- in dem Intra-Bilddecodierungsmodus eine zu der ersten inversen formangepassten Transformationscodierung unterschiedliche, zweite inverse formangepasste Transformationscodierung durchgeführt wird.

**17.** Anordnung nach Anspruch 16,
bei der die Prozessoreinheit derart eingerichtet ist, dass

- als erste inverse formangepasste Transformationscodierung eine Variante einer formangepassten inversen Diskreten Cosinus Transformation verwendet wird,
- als zweite inverse formangepasste Transformationscodierung eine inverse formangepasste Diskrete Cosinus Transformation verwendet wird.

**18.** Anordnung nach Anspruch 16 oder 17,
bei der die Prozessoreinheit derart eingerichtet ist, dass die erste inverse formangepasste Transformationscodierung und/oder die zweite inverse formangepasste Transformationscodierung derart erfolgt, dass eine Signalenergie der zu transformierenden Bildpunkte im Ortsbereich in etwa gleich ist mit einer Signalenergie der transformierten Bildpunkte im Frequenzbereich.

**19.** Anordnung nach einem der Ansprüche 16 bis 18,
bei der die Prozessoreinheit derart eingerichtet ist, dass bei der ersten inversen formangepassten Transformationscodierung transformierte Bildpunkte $\underline{x}_j$ nach folgender Vorschrift aus Transformationskoeffizienten $\underline{c}_j$ gebildet werden:

$$\underline{x}_j = \sqrt{\frac{2}{N}} \cdot (\underline{DCT - N}(p,\, k))^{-1} \cdot \underline{c}_j$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit p, k $\in$ [0, N-1]
- mit ()$^{-1}$ eine Inversion einer Matrix bezeichnet wird.

**20.** Anordnung nach einem der Ansprüche 16 bis 19,
bei der die Prozessoreinheit derart eingerichtet ist, dass die erste inverse formangepasste Transformationscodierung nur auf Randbildblöcke (RBB) angewendet wird.

**Claims**

**1.** Method for the coding of a digitized picture (B) which has picture objects (BO) having any desired number of pixels (BP),

- **characterized in that** the picture coding is carried out in an intra picture coding mode or in an inter picture coding mode,
- **characterized in that** the picture information of the pixels is transformed in the intra picture coding mode,
- **characterized in that** difference picture information between picture information of two succeeding pictures is transformed in the inter picture coding mode,
- **characterized in that** a first shape adapted transform coding is carried out in the inter picture coding mode, and
- **characterized in that** a second shape adapted transform coding which is different from the first shape adapted transform coding (IDCT) is carried out in the intra picture coding mode.

**2.** Method according to Claim 1,

- in which a variant of a shape adapted discrete cosine transform is used as the first shape adapted transform coding.

- in which a shape adapted discrete cosine transform is used as the second shape adapted transform coding.

3. Method according to Claim 1 or 2,
   in which the first shape adapted transform coding and/or the second shape adapted transform coding is carried out in such a way that a signal energy of the pixels (BP) to be transformed in the space domain is approximately identical to a signal energy of the transformed pixels (BP) in the frequency domain.

4. Method according to one of the preceding claims,
   in which the transform coefficients $\underline{c}_j$ of the pixels $\underline{x}_j$ which are transformed in accordance with the first shape adapted transform coding are formed in accordance with the following specification:

$$\underline{c}_j = \sqrt{\frac{2}{N}} \cdot \underline{DCT - N}(p, k) \cdot \underline{x}_j$$

where

- N designates a magnitude of the picture vector which is to be transformed and in which the transformed pixels are contained,
- $\underline{DCT - N}$ designates a transform matrix having the size N $\times$ N,
- p, k designate indices, where p, k $\in$ [0, N-1].

5. Method according to one of the preceding claims, in which the first shape adapted transform coding is applied only to edge picture blocks (RBB).

6. Method for the decoding of a digitized picture (B) which has picture objects (BO) having any desired number of pixels (BP),

- **characterized in that** the picture decoding is carried out in an intra picture decoding mode or in an inter picture decoding mode,
- **characterized in that** the picture information (I picture) of the pixels is transformed in the intra picture decoding mode,
- **characterized in that** difference picture information between picture information of two succeeding pictures (P picture, B picture) is transformed in the inter picture decoding mode,
- **characterized in that** a first inverse shape adapted transform coding is carried out in the inter picture decoding mode, and
- **characterized in that** a second inverse shape adapted transform coding which is different from the first inverse shape adapted transform coding is carried out in the intra picture decoding mode.

7. Method according to Claim 6,

- in which a variant of a shape adapted inverse discrete cosine transform is used as the first inverse shape adapted transform coding.
- in which an inverse shape adapted discrete cosine transform is used as the second inverse shape adapted transform coding.

8. Method according to Claim 6 or 7,
   in which the first inverse shape adapted transform coding and/or the second inverse shape adapted transform coding is carried out in such a way that a signal energy of the pixels to be transformed in the space domain is approximately identical to a signal energy of the transformed pixels in the frequency domain.

9. Method according to one of Claims 6 to 8,
   in which pixels $\underline{x}_j$ that are transformed during the first inverse shape adapted transform coding are formed from transform coefficients in accordance with the following specification:

$$\underline{x}_j = \sqrt{\frac{2}{N}} \cdot (\underline{DCT - N}(p,k))^{-1} \cdot \underline{c}_j$$

where

- N designates a magnitude of the picture vector which is to be transformed and in which the transformed pixels are contained,
- $\underline{DCT - N}$ designates a transform matrix having the size $N \times N$,
- p, k designate indices, where $p, k \in [0, N\text{-}1]$
- $(\ )^{-1}$ designates inversion of a matrix.

10. Method according to one of Claims 6 to 9,
    in which the first inverse shape adapted transform coding is applied only to edge picture blocks.

11. Arrangement for the coding of a digitized picture (B) which has picture objects (BO) with any desired number of pixels (BP), having a processor unit (P),
    **characterized in that** the processor unit is set up in such a way that

    - the picture coding is carried out in an intra picture coding mode or in an inter picture coding mode,
    - the picture information of the pixels is transformed in the intra picture coding mode,
    - difference picture information between picture information of two succeeding pictures is transformed in the inter picture coding mode;
    - a first shape adapted transform coding (IDCT) is carried out in the inter picture coding mode, and
    - a second shape adapted transform coding which is different from the first shape adapted transform coding is carried out in the intra picture coding mode.

12. Arrangement according to Claim 11,
    in which the processor unit is set up in such a way that

    - a variant of a shape adapted discrete cosine transform is used as the first shape adapted transform coding.
    - a shape adapted discrete cosine transform is used as the second shape adapted transform coding.

13. Arrangement according to Claim 11 or 12,
    in which the processor unit is set up in such a way that the first shape adapted transform coding and/or the second shape adapted transform coding is carried out in such a way that a signal energy of the pixels to be transformed in the space domain is approximately identical to a signal energy of the transformed pixels in the frequency domain.

14. Arrangement according to one of Claims 11 to 13, in which the processor unit is set up in such a way that the transform coefficients $\underline{c}_j$ of the pixels $\underline{x}_j$ which are transformed in accordance with the first shape adapted transform coding are formed in accordance with the following specification:

$$\underline{c}_j = \sqrt{\frac{2}{N}} \cdot \underline{DCT - N}(p,k) \cdot \underline{x}_j$$

where

- N designates a magnitude of the picture vector which is to be transformed and in which the transformed pixels are contained,
- $\underline{DCT - N}$ designates a transform matrix having the size $N \times N$,
- p, k designate indices, where $p, k \in [0, N\text{-}1]$.

15. Arrangement according to one of Claims 11 to 14, in which the processor unit is set up in such a way that the first shape adapted transform coding is applied only to edge picture blocks (RBB).

16. Arrangement for the decoding of a digitized picture (B) which has picture objects (BO) with any desired number of pixels (BP), having a processor unit which is set up in such a way that

- the picture decoding is carried out in an intra picture decoding mode or in an inter picture decoding mode,
- the picture information of the pixels is transformed in the intra picture decoding mode,
- difference picture information between picture information of two succeeding pictures is transformed in the inter picture decoding mode,
- a first inverse shape adapted transform coding is carried out in the inter picture decoding mode, and
- a second inverse shape adapted transform coding which is different from the first inverse shape adapted transform coding is carried out in the intra picture decoding mode.

**17.** Arrangement according to Claim 16,
in which the processor unit is set up in such a way that

- a variant of a shape adapted inverse discrete cosine transform is used as the first inverse shape adapted transform coding.
- an inverse shape adapted discrete cosine transform is used as the second inverse shape adapted transform coding.

**18.** Arrangement according to Claim 16 or 17,
in which the processor unit is set up in such way that the first inverse shape adapted transform coding and/or the second inverse shape adapted transform coding is carried out in such a way that a signal energy of the pixels to be transformed in the space domain is approximately identical to a signal energy of the transformed pixels in the frequency domain.

**19.** Arrangement according to one of Claims 16 to 18, in which the processor unit is set up in such a way that pixels $\underline{x}_j$ that are transformed during the first inverse shape adapted transform coding are formed from transform coefficients $\underline{c}_j$ in accordance with the following specification:

$$\underline{x}_j = \sqrt{\frac{2}{N}} \cdot (\underline{DCT\text{-}N}(p, k))^{-1} \cdot \underline{c}_j$$

where

- N designates a magnitude of the picture vector which is to be transformed and in which the transformed pixels are contained,
- $\underline{DCT\text{-}N}$ designates a transform matrix having the size $N \times N$,
- p, k designate indices, where p, k $\in$ [0, N-1]
- ( )$^{-1}$ designates inversion of a matrix.

**20.** Arrangement according to one of Claims 16 to 19, in which the processor unit is set up in such a way that the first inverse shape adapted transform coding is applied only to edge picture blocks (RBB).

**Revendications**

**1.** Procédé pour le codage d'une image numérisée (B) qui comporte des objets d'image (BO) avec un nombre quelconque de points d'image (BP),
**caractérisé par** le fait

- que le codage d'images a lieu dans un mode de codage d'image du type intra ou dans un mode de codage d'image du type inter,
- que, dans le mode de codage d'image du type intra, l'information d'image des points d'image est transformée,
- que, dans le mode de codage d'image du type inter, l'information de la différence des informations d'image de deux images successives est transformée,
- que, dans le mode de codage d'image du type inter, on exécute un premier codage par transformation adaptée à la forme et
- que, dans le mode de codage d'image du type intra, on exécute un deuxième codage par transformation (IDCT) adaptée à la forme différent du premier codage par transformation adaptée à la forme.

**2.** Procédé selon la revendication 1

- dans lequel on utilise, comme premier codage par transformation adaptée à la forme, une variante d'une transformation par cosinus discrète adaptée à la forme,
- dans lequel on utilise, comme deuxième codage par transformation adaptée à la forme, une transformation par cosinus discrète adaptée à la forme.

**3.** Procédé selon la revendication 1 ou 2

au cours duquel on exécute le premier codage par transformation adaptée à la forme et/ou le deuxième codage par transformation adaptée à la forme de telle sorte que l'énergie des signaux des points d'image à transformer (BP) dans le domaine spatial est environ la même que l'énergie des signaux des points d'image transformés dans le domaine fréquentiel.

**4.** Procédé selon l'une des revendications précédentes

au cours duquel les coefficients de transformation $\underline{c}_j$ des points d'image $\underline{x}_j$, transformés selon le premier codage par transformation adaptée à la forme, sont générés conformément à la règle suivante:

$$\underline{c}_j = \sqrt{\frac{2}{N}} \cdot \underline{DCT\text{-}N}(p, k) \cdot \underline{x}_j$$

dans laquelle

- N désigne une dimension du vecteur d'image à transformer, dans lequel sont compris des points d'image transformés,
- $\underline{DCT\text{-}N}$ désigne une matrice de transformation de la grandeur N x N.
- p, k désignent des indices avec p, k $\in$ [0, N-1].

**5.** Procédé selon l'une des revendications précédentes

au cours duquel on applique le premier codage par transformation adaptée à la forme seulement sur les blocs d'image de contour (RBB).

**6.** Procédé pour le décodage d'une image numérisée (B) qui comporte des objets d'image (BO) avec un nombre quelconque de points d'image (BP),

**caractérisé par** le fait

- que le décodage d'images a lieu dans un mode de décodage d'image du type intra ou dans un mode de décodage d'image du type inter,
- que, dans le mode de décodage d'image du type intra, l'information d'image (image I) des points d'image est transformée,
- que, dans le mode de décodage d'image du type inter, l'information de la différence des informations d'image de deux images (image P, image B) consécutives est transformée,
- que, dans le mode de décodage d'image du type inter, on exécute un premier codage par transformation inverse adaptée à la forme et
- que, dans le mode de décodage d'image du type intra, on exécute un deuxième codage par transformation inverse adaptée à la forme différent du premier codage par transformation inverse adaptée à la forme.

**7.** Procédé selon la revendication 6

- pour lequel on utilise, comme premier codage par transformation inverse adaptée à la forme, une variante d'une transformation par cosinus discrète inverse adaptée à la forme,
- pour lequel on utilise, comme deuxième codage par transformation inverse adaptée à la forme, une transformation par cosinus discrète inverse adaptée à la forme.

**8.** Procédé selon la revendication 6 ou 7

au cours duquel le premier codage par transformation inverse adaptée à la forme et/ou le deuxième codage par transformation inverse adaptée à la forme ont lieu de telle sorte qu'une énergie des signaux des points d'image à transformer dans le domaine spatial est environ la même qu'une énergie des signaux des points d'image trans-

**14**

formés dans le domaine fréquentiel.

9. Procédé selon l'une des revendications 6 à 8
au cours duquel on génère, à partir des coefficients de transformation, les points d'image $\underline{x}_j$ transformés lors du premier codage par transformation inverse adaptée à la forme conformément à la règle suivante:

$$\underline{x}_j = \sqrt{\frac{2}{N}} \cdot (\underline{DCT - N}(p, k))^{-1} \cdot \underline{c}_j$$

dans laquelle

- N désigne une dimension du vecteur d'image à transformer, dans lequel sont compris les points d'image transformés,

- $\underline{DCT - N}$ désigne une matrice de transformation de la grandeur N x N.

- p, k désignent des indices avec p, k $\in$ [0, N-1]

- ( )$^-$ désigne une inversion d'une matrice.

10. Procédé selon l'une des revendications 6 à 9
au cours duquel on applique le premier codage par transformation inverse adapté à la forme seulement sur des blocs d'image de contour.

11. Dispositif pour le codage d'une image numérisée (B) qui comporte des objets d'image (BO) avec un nombre quelconque de points d'image (BP), comportant une unité processeur (P),
**caractérisé par** le fait que l'unité processeur est réglée de telle sorte que

- le codage d'images a lieu dans un mode de codage d'image du type intra ou dans un mode de codage d'image du type inter,
- dans le mode de codage d'image du type intra, l'information d'image des points d'image est transformée,
- dans le mode de codage d'image du type inter, l'information de différence d'information d'image de deux images consécutives est transformée,
- dans le mode de codage d'image du type inter, un premier codage par transformation adaptée à la forme (IDCT) est exécuté et
- dans le mode de codage d'image du type intra, on exécute un deuxième codage par transformation adaptée à la forme différent du premier codage par transformation adaptée à la forme.

12. Dispositif selon la revendication 11
dans lequel l'unité processeur est réglée de telle sorte que

- comme premier codage par transformation adaptée à la forme, on utilise une variante d'une transformation par cosinus discrète adaptée à la forme,
- comme deuxième codage par transformation adaptée à la forme, on utilise une transformation par cosinus discrète adaptée à la forme.

13. Dispositif selon la revendication 11 ou 12
dans laquelle l'unité processeur est réglée de telle sorte que le premier codage par transformation adaptée à la forme et/ou le deuxième codage par transformation adaptée à la forme sont exécutés de telle sorte qu'une énergie des signaux des points d'image à transformer (BP) dans le domaine spatial est environ la même que l'énergie des signaux des points d'image transformés dans le domaine fréquentiel.

14. Dispositif selon la revendication 11 à 13
dans laquelle l'unité processeur est réglée de telle sorte que des coefficients de transformation $\underline{c}_j$ des points d'image $\underline{x}_j$, transformés selon le premier codage par transformation adaptée à la forme, sont générés conformément à la règle suivante:

$$\underline{c}_j = \sqrt{\frac{2}{N}} \cdot \underline{DCT - N}(p,k) \cdot \underline{x}_j$$

dans laquelle

- N désigne une dimension du vecteur d'image à transformer, dans lequel sont compris des points d'image transformés,
- $\underline{DCT - N}$ désigne une matrice de transformation de la grandeur N x N.
- p, k désignent des indices avec p, k $\in$ [0, N-1].

**15.** Dispositif selon l'une des revendications 11 à 14
dans lequel l'unité processeur est réglée de telle sorte que le premier codage par transformation adaptée à la forme n'est appliqué que sur les blocs d'image de contour (RBB).

**16.** Dispositif pour le décodage d'une image numérisée (B) qui comporte des objets d'image (BO) avec un nombre quelconque de points d'image (BP),
avec une unité processeur (P) réglée de telle sorte que

- le décodage d'images a lieu dans un mode de décodage d'image du type intra ou dans un mode de décodage d'image du type inter,
- dans le mode de décodage d'image du type intra, l'information d'image des points d'image est transformée,
- dans le mode de décodage d'image du type inter, l'information de différence d'information d'image de deux images consécutives est transformée,
- dans le mode de décodage d'image du type inter, un premier codage par transformation inverse adaptée à la forme est exécuté et
- dans le mode de décodage d'image du type intra, on exécute un deuxième codage par transformation inverse adaptée à la forme différent du premier codage par transformation inverse adaptée à la forme

**17.** Dispositif selon la revendication 16
dans lequel l'unité processeur est réglée de telle sorte que

- comme premier codage par transformation inverse adaptée à la forme, on utilise une variante d'une transformation par cosinus discrète inverse adaptée à la forme,
- comme deuxième codage par transformation inverse adaptée à la forme, on utilise une transformation par cosinus discrète inverse adaptée à la forme.

**18.** Dispositif selon la revendication 16 ou 17
dans lequel l'unité processeur est réglée de telle sorte que le premier codage par transformation inverse adaptée à la forme et/ou le deuxième codage par transformation inverse adaptée à la forme sont exécutés de telle sorte qu'une énergie des signaux des points d'image à transformer dans le domaine spatial est environ la même que l'énergie des signaux des points d'image transformés dans le domaine fréquentiel.

**19.** Dispositif selon l'une des revendication 16 à 18
dans lequel l'unité processeur est réglée de telle sorte qu'on génère, à partir des coefficients de transformation $\underline{c}_j$, des points d'image $\underline{x}_j$, transformés lors du premier codage par transformation inverse adaptée à la forme, conformément à la règle suivante:

$$\underline{x}_j = \sqrt{\frac{2}{N}} \cdot (\underline{DCT - N}(p, k))^{-1} \cdot \underline{c}_j$$

dans laquelle

- N désigne une dimension du vecteur d'image à transformer, dans lequel sont compris les points d'image transformés,
- $\underline{DCT - N}$ désigne une matrice de transformation de la grandeur N x N.
- p, k désignent des indices avec p, k $\in$ [0, N-1]

- ()⁻ désigne une inversion d'une matrice.

20. Dispositif selon l'une des revendications 16 à 19
dans lequel l'unité processeur est réglée de telle sorte que le premier codage par transformation inverse adaptée à la forme n'est appliqué que sur des blocs d'image de contour (RBB).

# FIG 1

Zuführung von Randbildblöcken
zur Transformationscodierungseinheit — 101

R1

Transformation der Randbildblöcke
nach folgender Vorschrift :

$$\underline{c}_j = \sqrt{\frac{2}{N}} \cdot \underline{DCT\text{-}N}\,(p,k) \cdot \underline{x}_j$$

— 102

Quantisierung der $\underline{c}_j$ — 103

Entropiecodierung — 104

Ü11 — Übertragung der Bildinformation — 105

Entropiecodierung — 106

Inverse Quantisierung der $\underline{c}_j$ — 107

R2

Inverse Transformationscodierung
nach folgender Vorschrift:

$$\underline{x}_j = \frac{N^2}{4}\,(\underline{DCT\text{-}N}\,(p,k))^T \cdot \underline{c}_j$$

— 108

# FIG 2

B
K
R1
R2
SP
ÜW
SP
P
P

# FIG 3

ST
p
BB
S
SE
DCT
Q
q
IQ
SE
IDCT
AE
LF
SP/MC
v
f

To video
multiplex
coder

# FIG 4